# EUROPEAN PATENT APPLICATION

(11) **EP 4 661 129 A1**
(43) Date of publication of application: **10.12.2025**
(21) Application number: 25180382.1
(22) Date of filing: 03.06.2025
(51) Int. Cl.: H01M 10/04, H01M 50/176, H01M 50/533, H01M 50/536, H01M 50/538

(54) **SECONDARY BATTERY AND METHOD OF MANUFACTURING THE SAME**

(30) Priority: 03.06.2024 KR 20240072545; 28.10.2024 KR 20240148700
(71) Applicant: SK On Co., Ltd., Seoul 03161 (KR)
(72) Inventor: KWAK, Seung Ho, 34124 Daejeon (KR)
(74) Representative: Stolmár & Partner Patentanwälte PartG mbB

(57) **Abstract**

The disclosure relates to a battery cell. More specifically, the disclosure relates to a battery cell minimizing a connection space between a non-coating portion forming an electrode assembly (100) and a current collector (220). The battery cell according to the disclosure can maximize the use efficiency of an internal space by minimizing a connection space between a non-coating portion of a jelly roll-shaped electrode assembly and a current collector (220). The battery cell according to the disclosure can increase a capacity by reducing a space loss inside a case (400) accommodating an electrode assembly (100). The battery cell according to the disclosure arranges a welding face of a current collector (220) perpendicular to a winding axis direction of an electrode assembly (100), and thus can reduce damage to the electrode assembly (100) when the battery cell is crushed and can improve safety.

## Description

### TECHINICAL FIELD

Embodiments of the disclosure relate to a secondary battery.

### BACKGROUND

In a prismatic secondary battery, according to an existing method, the connection between a current collector and an electrode non-coating portion is made in a direction perpendicular to a winding axis direction of an electrode assembly, and this connection structure may require a connection space depending on a method of joining the electrode non-coating portion and the current collector. If the connection space is reduced, an energy density of the secondary battery may be reduced.

### SUMMARY

An object of embodiments of the disclosure is to provide a secondary battery minimizing a connection space between a non-coating portion forming an electrode assembly and a current collector.

A secondary battery according to an embodiment of the disclosure may include at least one electrode assembly each including an electrode assembly body and a plurality of electrode assembly non-coating portions protruding from the electrode assembly body; a case accommodating the at least one electrode assembly, the case having a hollow shape with an open upper face; a current collector accommodated in the case and connected to the electrode assembly non-coating portions; and a cap plate coupled to the case. The electrode assembly non-coating portions may be bent and coupled to the current collector.

According to an embodiment of the disclosure, a secondary battery minimizing a connection space between a non-coating portion forming an electrode assembly and a current collector can be provided.

A secondary battery according to an embodiment of the disclosure can maximize the use efficiency of an internal space by minimizing a connection space between a non-coating portion of a jelly roll-shaped electrode assembly and a current collector.

A secondary battery according to an embodiment of the disclosure can increase a capacity by reducing a space loss inside a case accommodating an electrode assembly.

A secondary battery according to an embodiment of the disclosure arranges a welding face of a current collector perpendicular to a winding axis direction of an electrode assembly, and thus can reduce damage to the electrode assembly when the secondary battery is crushed and can improve safety.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates a secondary battery according to an embodiment of the disclosure.
FIG. 2 illustrates that a case is removed from FIG. 1.
FIG. 3 illustrates an exploded perspective view of FIG. 1.
FIG. 4 illustrates a cross-sectional view of a secondary battery of FIG. 2 taken along A1-A2.
FIG. 5 illustrates an electrode assembly according to an embodiment of the disclosure before an electrode assembly non-coating flat portion is bent.
FIG. 6 illustrates an electrode assembly according to an embodiment of the disclosure after an electrode assembly non-coating flat portion is bent.
FIG. 7 illustrates an unfolded view of an electrode assembly according to an embodiment of the disclosure.
FIG. 8 illustrates an electrode assembly according to an embodiment of the disclosure before an electrode assembly non-coating curved portion is bent.
FIG. 9 illustrates an electrode assembly according to an embodiment of the disclosure after an electrode assembly non-coating curved portion is bent.
FIG. 10 illustrates an unfolded view of an electrode assembly according to an embodiment of the disclosure.
FIG. 11 is a cross-sectional view of a secondary battery of FIG. 2 taken along A1-A2 and illustrates that electrode assembly non-coating flat portions forming a first electrode assembly and a second electrode assembly are bent toward between the first electrode assembly and the second electrode assembly.
FIG. 12 illustrates an electrode assembly according to an embodiment of the disclosure before an electrode assembly non-coating flat portion is bent.
FIG. 13 illustrates an electrode assembly according to an embodiment of the disclosure after an electrode assembly non-coating flat portion is bent.
FIG. 14 illustrates an enlarged view of area B of FIG. 12.
FIG. 15 is a cross-sectional view of a secondary battery of FIG. 2 taken along A1-A2 and illustrates that electrode assembly non-coating flat portions forming a pair of first electrode assemblies and a pair of second electrode assemblies are bent toward between the first and second electrode assemblies.

### DETAILED DESCRIPTION OF THE EMBODIMENTS

Reference will now be made in detail to embodiments of the disclosure, examples of which are illustrated in the accompanying drawings. However, the following description is merely an example and does not intend to limit embodiments of the disclosure to a specific implementation.

A secondary battery according to an embodiment of the disclosure can be applied to a pouch cell, a cylindrical cell, a prismatic cell, etc. An electrode assembly forming the secondary battery may be of a winding type, a stacking type, a zigzag folding type, or a stack-folding type.

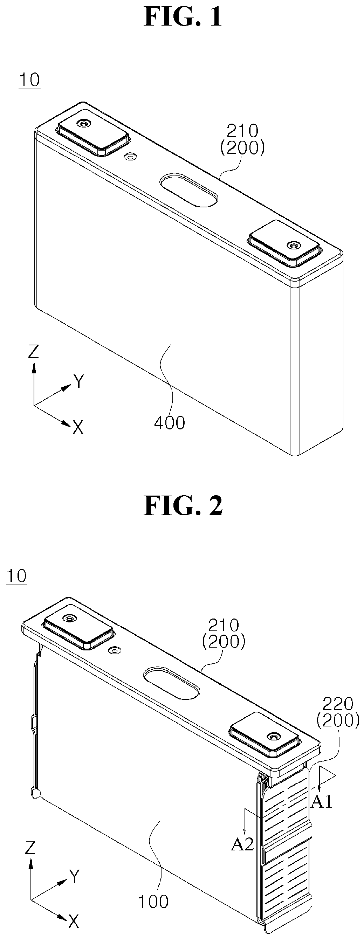

In embodiments of the disclosure, a coordinate system may be a cartesian coordinate system. In embodiments of the disclosure, an up-down direction and a front-rear direction may be set with reference to FIG. 1.

The front-rear direction may be parallel to the X-axis. For example, a positive X-direction may indicate the forward. For example, a negative X-direction may indicate the rearward.

The up-down direction may be parallel to the Z-axis. For example, a positive Z-direction may indicate the upward. For example, a negative Z-direction may indicate the downward.

A left-right direction may be parallel to the Y-axis. For example, a positive Y-direction may indicate the right side. For example, a negative Y-direction may indicate the left side. The Y-axis may be perpendicular to each of the X-axis and the Z-axis.

Referring to FIGS. 1 to 3, a secondary battery 10 may include an electrode assembly 100. The secondary battery 10 may include at least one electrode assembly 100.

The electrode assembly 100 may be extended along a direction. For example, the electrode assembly 100 may extend along the front-rear direction. The direction in which the electrode assembly 100 extends may be a longitudinal direction or a length direction of the secondary battery 10. The longitudinal direction of the secondary battery 10 may be the front-rear direction.

The secondary battery 10 may include a plurality of electrode assemblies 100. The plurality of electrode assemblies 100 may be arranged or stacked in a direction. For example, the direction in which the plurality of electrode assemblies 100 are arranged or stacked may form a shape extending in a thickness direction of the secondary battery 10. In other words, a thickness direction of the electrode assembly 100 may be the thickness direction of the secondary battery 10.

The secondary battery 10 may include a cap assembly 200. The cap assembly 200 may be connected or coupled to the electrode assembly 100. For example, the cap assembly 200 may be connected or coupled to electrode assembly non-coating portions 120 and 130 forming the electrode assembly 100. The cap assembly 200 may surround an upper portion and a side portion of the electrode assembly 100.

The cap assembly 200 may include a cap plate 210. The cap plate 210 may form an upper portion of the secondary battery 10. The cap plate 210 may be located on the electrode assembly 100. The cap plate 210 may be formed along a direction. For example, the cap plate 210 may extend along a longitudinal direction or a length direction of the electrode assembly 100.

The cap plate 210 may include a cap plate body 211. The cap plate body 211 may form a plate or board shape. The cap plate body 211 may include a through hole passing through an upper face and a lower face.

The cap plate 210 may include a cap plate terminal 212. The cap plate terminal 212 may be formed on the cap plate body 211. The cap plate terminal 212 may protrude from the cap plate body 211. For example, the cap plate terminal 212 may penetrate the upper and lower faces of the cap plate body 211.

The cap assembly 200 may include a current collector 220. The current collector 220 may be connected or coupled to the cap plate 210. For example, the current collector 220 may be connected or coupled to the cap plate terminal 212. The current collector 220 may extend from both sides of the cap plate 210. For example, the current collector 220 may extend downward from lower ends of both sides of the cap plate 210.

The current collector 220 may be arranged at the front and the rear of the electrode assembly 100. For example, the current collector 220 may be arranged at the front of the electrode assembly 100 along the X-axis direction or behind the electrode assembly 100 along the X-axis direction. The current collector 220 may be connected to the electrode assembly non-coating flat portion 120.

The secondary battery 10 may include an insulating plate 300. The insulating plate 300 may be coupled to the electrode assembly 100 and the current collector 220. For example, the insulating plate 300 may cover an outer face of the current collector 220 coupled to the electrode assembly 100. The insulating plate 300 may be arranged at the front and the rear of the electrode assembly 100. For example, the insulating plate 300 may be arranged in front of the current collector 220 along the X-axis direction or behind the current collector 220 along the X-axis direction.

The insulating plate 300 may be coupled to one or more electrode assemblies 100. For example, the insulating plate 300 may cover a front face of a first electrode assembly 101 and a front face of a second electrode assembly 102.

The secondary battery 10 may include a case 400. The case 400 may accommodate the electrode assembly 100, the current collector 220, and the insulating plate 300. The case 400 may form a hollow shape. The case 400 may form a shape with an open upper portion.

The case 400 may include a case front face 400F. The case front face 400F may be directed toward or face the front. The case 400 may include a case rear face 400R. The case rear 400R may be directed toward or face the rear. The case front face 400F and the case rear face 400R may be spaced apart from each other along the longitudinal or length direction of the electrode assembly 100.

The case 400 may include a case left face 400LS. The case left face 400LS may be directed toward or face the left side. The case 400 may include a case right face 400RS. The case right face 400RS may be directed toward or face the right side.

The case left face 400LS and the case right face 400RS may be spaced apart from each other along a transverse direction or a horizontal direction of the electrode assembly 100. The plurality of electrode assemblies 100 may be stacked between the case left face 400LS and the case right face 400RS along the Y-axis direction.

The case front face 400F, the case left face 400LS, the case rear face 400R, and the case right face 400RS may form a perimeter of the case 400. The case front face 400F, the case left face 400LS, the case rear face 400R, and the case right face 400RS may be formed consecutively.

The cap plate 210 of the cap assembly 200 may be located on an upper portion of the case 400. For example, the cap plate 210 may block the open upper portion of the case 400. The insulating plate 300 may be located between an inner face of the case 400 and the current collector 220. For example, the insulating plate 300 may be located between the inside of the case front face 400F and the outer face of the current collector 220.

The electrode assembly 100 may include the first electrode assembly 101 and the second electrode assembly 102. The electrode assembly 100 may indicate or include at least one of the first electrode assembly 101 or the second electrode assembly 102.

The first electrode assembly 101 and the second electrode assembly 102 may be arranged in a row along the thickness direction of the secondary battery 10. A pad for preventing impact and flame spread may be arranged between the first electrode assembly 101 and the second electrode assembly 102.

In embodiments of the disclosure, the electrode assembly 100 may form a shape of winding around a winding axis 100AX. The winding axis 100AX may be parallel to the X-axis direction. For example, the electrode assembly 100 may form a shape in which an aluminum electrode foil is repeatedly wound around the winding axis 100AX.

For example, the first electrode assembly 101 may form a shape in which the aluminum electrode foil is repeatedly wound around a first winding axis 101AX. For example, the second electrode assembly 102 may form a shape in which the aluminum electrode foil is repeatedly wound around a second winding axis 102AX.

The aluminum electrode foil may include a positive electrode foil which is a first electrode, a negative electrode foil which is a second electrode, and a separator between the positive electrode foil and the negative electrode foil. The electrode assembly 100 may be referred to as a "JELLY ROLL."

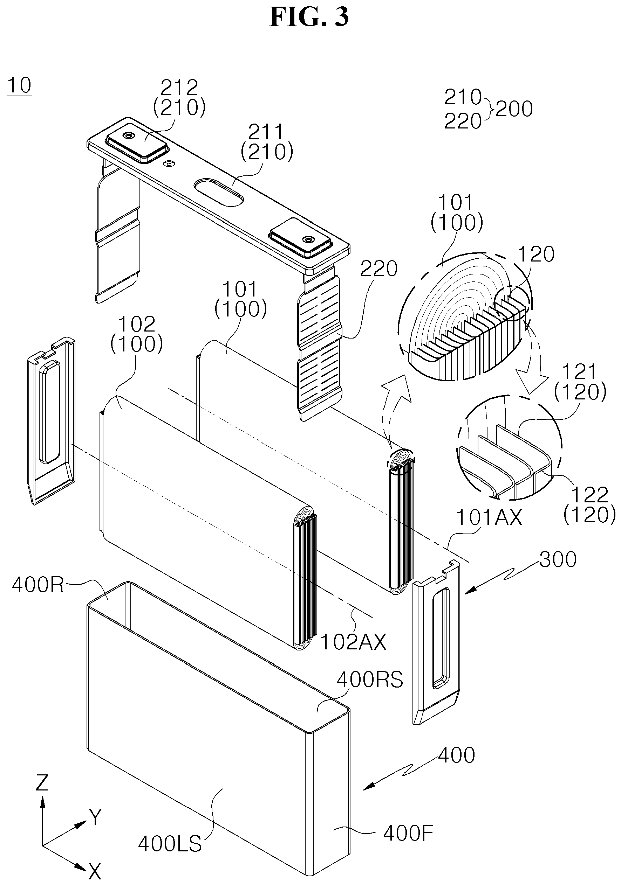

Referring to FIGS. 3 to 6, the electrode assembly 100 may include an electrode assembly body 110. The electrode assembly body 110 may extend from an end and lead to another end. For example, the electrode assembly body 110 may extend from an end in the front-rear direction and lead to another end.

The electrode assembly body 110 may include a body left face facing the negative Y-axis direction and a body right face facing the positive Y-axis direction. A distance between the body left face and the body right face may form a thickness of the electrode assembly body 110.

The electrode assembly body 110 may include a body front face facing the positive X-axis direction and a body rear face facing the negative X-axis direction. A distance between the body front face and the body rear face may form a length of the electrode assembly body 110.

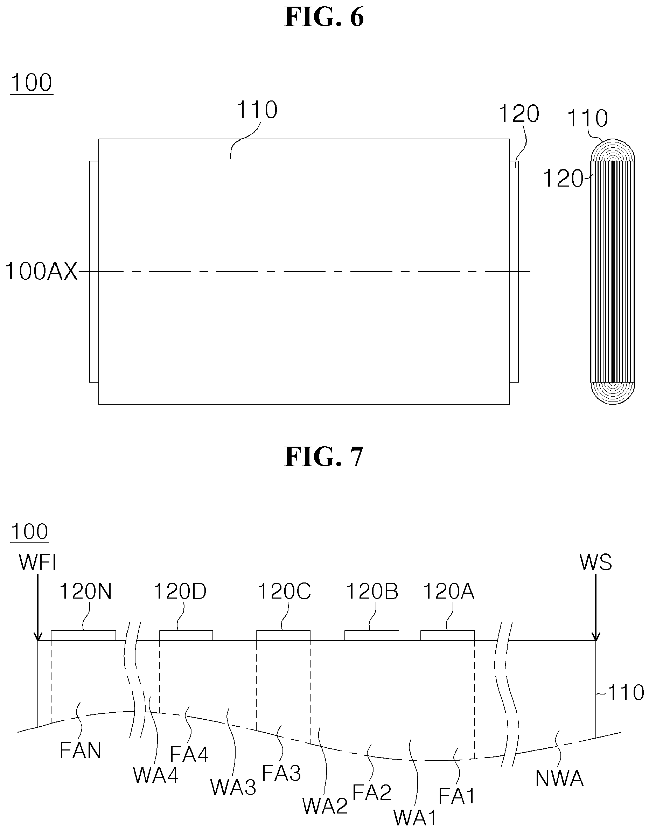

FIG. 7 illustrates an unfolded view of the electrode assembly 100. Before the electrode assembly 100 is wound around the winding axis 100AX and is formed in a shape of the jelly roll, the electrode assembly 100 may form a long strip shape having a winding core WS and a winding end WF. The winding core WS may correspond to the winding axis 100AX of the electrode assembly 100.

The electrode assembly 100 may form the electrode assembly body 110 and the electrode assembly non-coating portions 120 and 130 through a notching operation. The electrode assembly body 110 may correspond to a coated area, and the electrode assembly non-coating portions 120 and 130 may correspond to an uncoated area.

The electrode assembly body 110 may include a non-curved portion NWA extending from the winding core WS as a starting point. The non-curved portion NWA may indicate an electrode assembly body 110 in which the electrode assembly non-coating portions 120 and 130 are not formed.

For example, in a process of winding the electrode assembly 100, the non-curved portion NWA of the electrode assembly body 110 may be an area without a separate non-coating portion. In a process of forming the jelly roll-shaped electrode assembly 100, the non-curved portion NWA may form a shape wound with respect to the winding core WS or the winding axis 100AX.

The electrode assembly body 110 may include an electrode assembly flat portion FA and an electrode assembly curved portion WA. In the jelly roll-shaped electrode assembly 100, the electrode assembly flat portion FA and the electrode assembly curved portion WA may have a structure surrounding the non-curved portion NWA.

The electrode assembly flat portion FA may form two faces of the electrode assembly 100. The electrode assembly flat portion FA may form a flat shape without a curved face. For example, the electrode assembly flat portion FA may face or be directed toward the left side or the right side. For example, the electrode assembly flat portion FA may be arranged parallel to the XZ plane.

The electrode assembly curved portion WA may form an upper face and a lower face of the electrode assembly 100. The electrode assembly curved portion WA may form an upper portion of the electrode assembly 100 which is convex upward, and a lower portion of the electrode assembly 100 which is convex downward. For example, in a process of forming the jelly roll of the electrode assembly 100, the electrode assembly curved portion WA may have a predetermined curvature with respect to the winding axis 100AX.

The electrode assembly flat portion FA and the electrode assembly curved portion WA may be formed sequentially. The electrode assembly flat portion FA and the electrode assembly curved portion WA may be formed alternately. For example, the electrode assembly flat portion FA and the electrode assembly curved portion WA may be sequentially connected from the non-curved portion NWA.

The electrode assembly flat portion FA may include a first electrode assembly flat portion FA1, a second electrode assembly flat portion FA2, a third electrode assembly flat portion FA3, a fourth electrode assembly flat portion FA4, and an Nth electrode assembly flat portion FAN.

The first electrode assembly flat portion FA1, the second electrode assembly flat portion FA2, the third electrode assembly flat portion FA3, the fourth electrode assembly flat portion FA4, and the Nth electrode assembly flat portion FAN may be spaced apart from each other.

For example, the first electrode assembly flat portion FA1, the second electrode assembly flat portion FA2, the third electrode assembly flat portion FA3, the fourth electrode assembly flat portion FA4, and the Nth electrode assembly flat portion FAN may be sequentially arranged to be spaced apart from each other along a direction in the non-curved portion NWA. Here, the Nth electrode assembly flat portion FAN may indicate any Nth electrode assembly flat portion FA.

The adj acent electrode assembly flat portions FA may be arranged to correspond to each other in the jelly roll-shaped electrode assembly 100. For example, the first electrode assembly flat portion FA1 and the second electrode assembly flat portion FA2 may be symmetrically arranged with respect to a virtual plane that includes the winding axis 100AX and is parallel to the XZ plane.

The third electrode assembly flat portion FA3 and the fourth electrode assembly flat portion FA4 may be symmetrically arranged with respect to the virtual plane that includes the winding axis 100AX and is parallel to the XZ plane.

The electrode assembly curved portion WA may include a first electrode assembly curved portion WA1, a second electrode assembly curved portion WA2, a third electrode assembly curved portion WA3, and a fourth electrode assembly curved portion WA4. The first electrode assembly curved portion WA1, the second electrode assembly curved portion WA2, the third electrode assembly curved portion WA3, and the fourth electrode assembly curved portion WA4 may be spaced apart from each other.

For example, the first electrode assembly curved portion WA1, the second electrode assembly curved portion WA2, the third electrode assembly curved portion WA3, and the fourth electrode assembly curved portion WA4 may be sequentially arranged to be spaced apart from each other along a direction in the non-curved portion NWA.

A length of the electrode assembly curved portion WA may be set to gradually increase. For example, the length of the electrode assembly curved portion WA may gradually increase as it goes from the first electrode assembly curved portion WA1 to the second electrode assembly curved portion WA2, the third electrode assembly curved portion WA3, and the fourth electrode assembly curved portion WA4.

The adjacent electrode assembly curved portions WA may be arranged to correspond to each other in the jelly roll-shaped electrode assembly 100. For example, the first electrode assembly curved portion WA1 and the second electrode assembly curved portion WA2 may be symmetrically arranged with respect to a virtual plane that includes the winding axis 100AX and is parallel to the YZ plane. The third electrode assembly curved portion WA3 and the fourth electrode assembly curved portion WA4 may be symmetrically arranged with respect to the virtual plane that includes the winding axis 100AX and is parallel to the YZ plane.

Referring to FIGS. 3 to 6, the electrode assembly non-coating portions 120 and 130 may include the electrode assembly non-coating flat portion 120.

The electrode assembly non-coating flat portion 120 may be formed outside the electrode assembly body 110. For example, the electrode assembly non-coating flat portion 120 may extend from the electrode assembly body 110 along the longitudinal direction of the secondary battery 10.

For example, the electrode assembly non-coating flat portion 120 may be formed from the electrode assembly body 110 along the positive X-direction or the negative X-direction.

The electrode assembly non-coating flat portion 120 may be connected to the electrode assembly flat portion FA. For example, the electrode assembly non-coating flat portion 120 may extend from the electrode assembly flat portion FA along the positive X-direction or the negative X-direction.

A plurality of electrode assembly non-coating flat portions 120 may be provided. The electrode assembly non-coating flat portion 120 may include a first non-coating flat portion 120A, a second non-coating flat portion 120B, a third non-coating flat portion 120C, a fourth non-coating flat portion 120D, and an Nth non-coating flat portion 120N. The first non-coating flat portion 120A, the second non-coating flat portion 120B, the third non-coating flat portion 120C, the fourth non-coating flat portion 120D, and the Nth non-coating flat portion 120N may be spaced apart from each other along a direction.

For example, the first non-coating flat portion 120A, the second non-coating flat portion 120B, the third non-coating flat portion 120C, the fourth non-coating flat portion 120D, and the Nth non-coating flat portion 120N may be arranged to correspond to the first electrode assembly flat portion FA1, the second electrode assembly flat portion FA2, the third electrode assembly flat portion FA3, the fourth electrode assembly flat portion FA4, and the Nth electrode assembly flat portion FAN, respectively. Here, the Nth non-coating flat portion 120N may indicate any Nth non-coating portion.

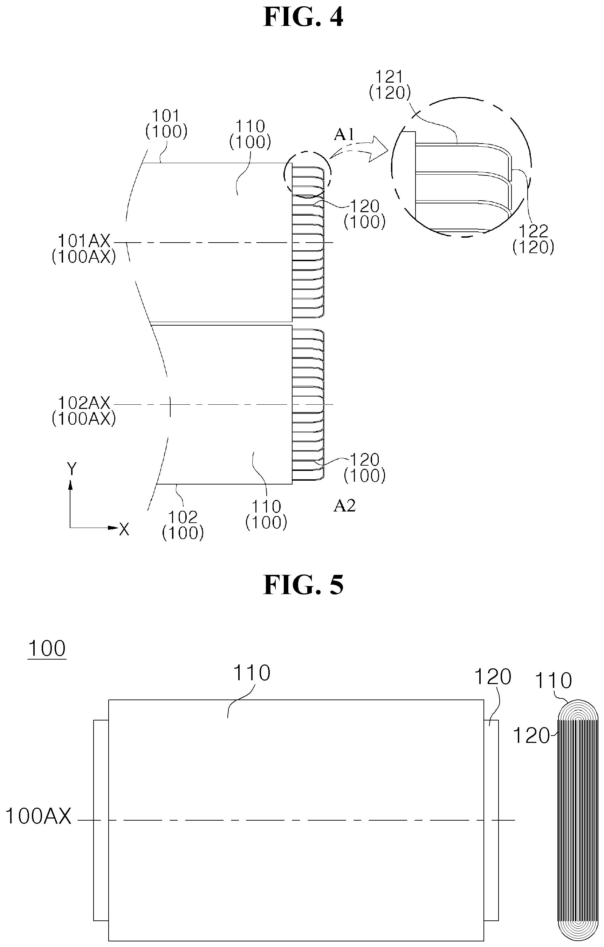

Referring to FIGS. 3 and 4, the electrode assembly non-coating flat portion 120 may form a curved face. For example, the electrode assembly non-coating flat portion 120 may be bent. For example, the electrode assembly non-coating flat portion 120 may extend by a predetermined distance in the longitudinal direction of the secondary battery 10 and then may be bent along the width direction of the secondary battery 10.

The electrode assembly non-coating flat portion 120 may include a non-coating body 121. The non-coating body 121 may extend from the electrode assembly body 110 in the longitudinal direction or the length direction of the secondary battery 10.

The non-coating body 121 may extend from a front face or rear face of the electrode assembly body 110. For example, the non-coating body 121 may extend by a predetermined distance from the front face of the non-coating body 121 along the longitudinal direction of the secondary battery 10.

The non-coating body 121 may have a plate or board shape. For example, the non-coating body 121 may have a shape of a flat plate without a curve. The non-coating body 121 may be parallel to the XZ plane.

A plurality of non-coating bodies 121 may be provided. The plurality of non-coating bodies 121 may be arranged in a row along the thickness direction of the electrode assembly 100. For example, the plurality of non-coating bodies 121 may be arranged in a row along the Y-axis direction. The plurality of non-coating bodies 121 may be spaced apart from each other.

The electrode assembly non-coating flat portion 120 may include a non-coating bent piece 122. The non-coating bent piece 122 may extend from the non-coating body 121. The non-coating bent piece 122 may be bent from the non-coating body 121. The non-coating bent piece 122 may be bent and extended from the non-coating body 121.

The non-coating bent piece 122 may extend from the non-coating body 121 in the thickness direction of the secondary battery 10. For example, the non-coating bent piece 122 may be bent at an end of the non-coating body 121 and extended in the thickness direction of the secondary battery 10.

An inner face of the non-coating bent piece 122 may face the electrode assembly body 110, and an outer face of the non-coating bent piece 122 may face the current collector 220. For example, the non-coating bent piece 122 may be formed in the YZ plane and may be parallel to the front face or the rear face of the electrode assembly body 110.

A plurality of non-coating bent pieces 122 may be provided. For example, the plurality of non-coating bent pieces 122 may be arranged in a row along the Y-axis direction. The plurality of non-coating bent pieces 122 may be connected to each other. The plurality of non-coating bent pieces 122 may be adjacent to each other. For example, at least a portion of a pair of non-coating bent pieces 122 adjacent along the Y-axis direction may overlap each other.

The winding axis 100AX may be parallel to the X-axis direction. Referring to FIG. 4, the electrode assembly non-coating flat portion 120 forming a single electrode assembly 100 may form a symmetrical shape with respect to the winding axis 100AX.

The non-coating bent piece 122 of the electrode assembly non-coating flat portion 120 may be bent toward the winding axis 100AX. The electrode assembly non-coating flat portion 120 arranged on the right side with respect to the winding axis 100AX may be bent in the negative Y-axis direction.

The electrode assembly non-coating flat portion 120 arranged on the left side with respect to the winding axis 100AX may be bent in the positive Y-axis direction. For example, the non-coating bent piece 122 forming the electrode assembly 100 may be bent toward the winding axis 100AX.

For example, the non-coating bent piece 122 forming the electrode assembly 100 may be symmetrically bent toward the winding axis 100AX. Through this, the non-coating bent piece 122 of the electrode assembly non-coating flat portion 120 may not go beyond the front face or the rear face of the electrode assembly 100.

Referring to FIG. 4, the secondary battery 10 according to an embodiment of the disclosure may include a pair of electrode assemblies 100 arranged in a row along the thickness direction of the electrode assembly 100. For example, the secondary battery 10 may include a first electrode assembly 101 and a second electrode assembly 102 arranged in a row along the thickness direction of the electrode assembly 100.

The first electrode assembly 101 may include an electrode assembly body 110 wound around the first winding axis 101AX and an electrode assembly non-coating flat portion 120 extending from the electrode assembly body 110 in the longitudinal direction or the length direction of the secondary battery 10.

The second electrode assembly 102 may include an electrode assembly body 110 wound around the second winding axis 102AX and an electrode assembly non-coating flat portion 120 extending from the electrode assembly body 110 in the longitudinal direction or the length direction of the secondary battery 10.

The first winding axis 101AX and the second winding axis 102AX may be parallel to the X-axis direction. The electrode assembly non-coating flat portion 120 of the first electrode assembly 101 may form a symmetrical shape with respect to the first winding axis 101AX.

The non-coating bent piece 122 of the electrode assembly non-coating flat portion 120 may be bent toward the winding axis 100AX. For example, a non-coating bent piece 122 forming the first electrode assembly 101 may be symmetrically bent toward the first winding axis 101AX, and a non-coating bent piece 122 forming the second electrode assembly 102 may be symmetrically bent toward the second winding axis 102AX.

Each of the first electrode assembly 101 and the second electrode assembly 102 may form the electrode assembly non-coating flat portion 120 from a point which is spaced apart from the winding axis 100AX by a predetermined distance in the Y-axis direction. For example, the non-curved portion NWA without a separate non-coating portion may be first arranged along the Y-axis direction from the winding axis 100AX, and the electrode assembly non-coating flat portion 120 may be formed on the electrode assembly flat portion FA connected to the non-curved portion NWA.

The non-coating bent piece 122 of the electrode assembly non-coating flat portion 120 may be arranged side by side to the current collector 220 coupled to the electrode assembly 100. The non-coating bent piece 122 and the current collector 220 may be arranged side by side to be spaced apart from each other in the YZ plane.

As a result, the non-coating bent piece 122 and the current collector 220 can be arranged in a row along the X-axis direction. For example, when the electrode assembly 100 and the current collector 220 are welded and coupled, the non-coating bent piece 122 and the current collector 220 may be arranged side by side to be spaced apart from each other along the X-axis direction corresponding to a welding direction.

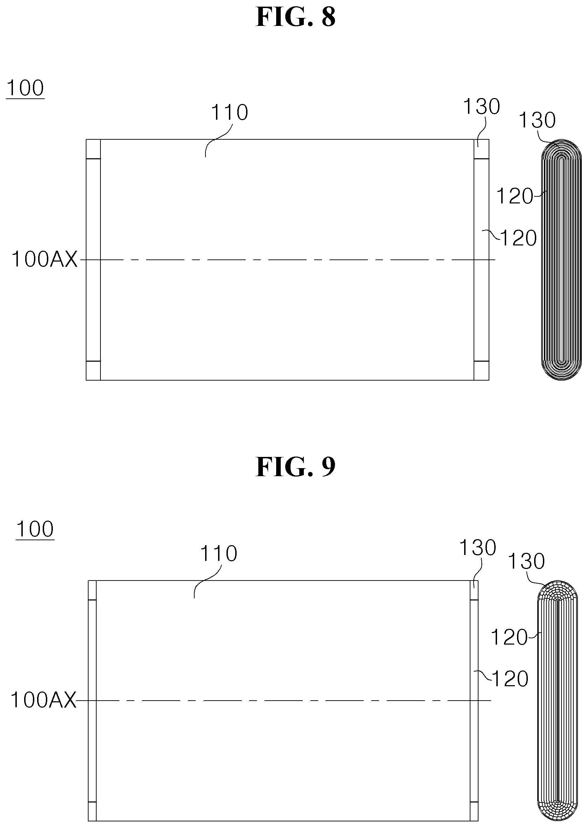

Referring to FIGS. 8 to 10, the electrode assembly non-coating portions 120 and 130 may further include an electrode assembly non-coating curved portion 130. The electrode assembly non-coating curved portion 130 may be formed outside the electrode assembly body 110.

For example, the electrode assembly non-coating curved portion 130 may extend from the electrode assembly body 110 along the longitudinal direction of the secondary battery 10. For example, the electrode assembly non-coating curved portion 130 may be formed along the positive X-direction or the negative X-direction from the electrode assembly body 110.

The electrode assembly non-coating curved portion 130 may be arranged on an upper portion or a lower portion of the electrode assembly non-coating flat portion 120 based on the electrode assembly non-coating flat portion 120.

The electrode assembly non-coating curved portion 130 may be connected to the electrode assembly curved portion WA. For example, the electrode assembly non-coating curved portion 130 may extend from the electrode assembly curved portion WA along the positive X-direction or the negative X-direction. The electrode assembly non-coating curved portion 130 may include a first non-coating curved portion 130A, a second non-coating curved portion 130B, a third non-coating curved portion 130C, and a fourth non-coating curved portion 130D.

The first non-coating curved portion 130A, the second non-coating curved portion 130B, the third non-coating curved portion 130C, and the fourth non-coating curved portion 130D may be spaced apart from each other along a direction. For example, the first non-coating curved portion 130A, the second non-coating curved portion 130B, the third non-coating curved portion 130C, and the fourth non-coating curved portion 130D may correspond to the first electrode assembly curved portion WA1, the second electrode assembly curved portion WA2, the third electrode assembly curved portion WA3, and the fourth electrode assembly curved portion WA4, respectively.

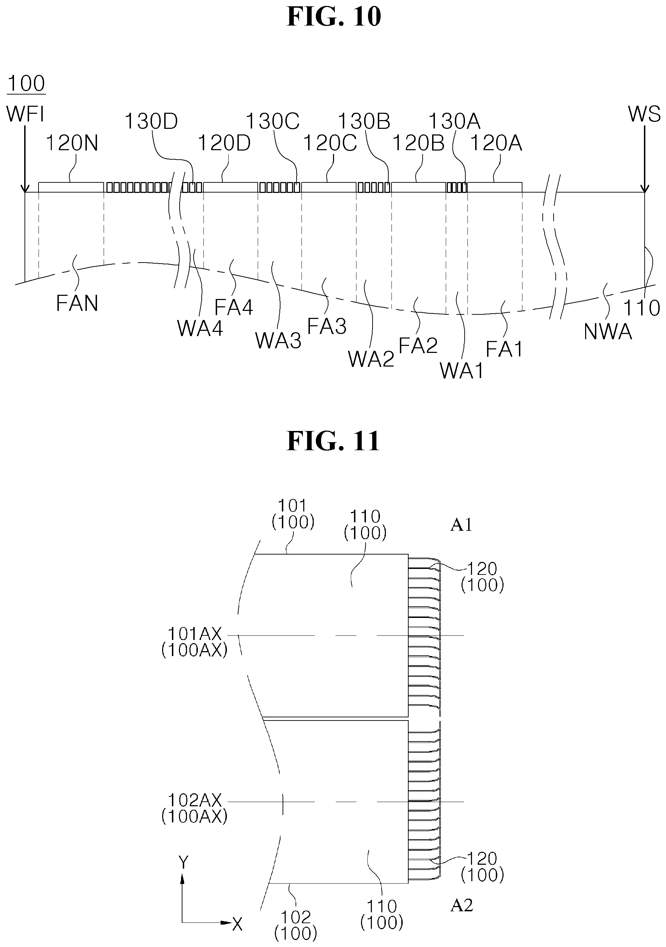

Referring to FIG. 11, the secondary battery 10 according to an embodiment of the disclosure may include a pair of electrode assemblies 100 arranged in a row along the thickness direction of the electrode assembly 100. For example, the secondary battery 10 may include a first electrode assembly 101 and a second electrode assembly 102 arranged in a row along the thickness direction of the electrode assembly 100.

The first electrode assembly 101 may include an electrode assembly body 110 wound around the first winding axis 101AX and an electrode assembly non-coating flat portion 120 extending from the electrode assembly body 110 in the longitudinal direction or the length direction of the secondary battery 10.

The second electrode assembly 102 may include an electrode assembly body 110 wound around the second winding axis 102AX and an electrode assembly non-coating flat portion 120 extending from the electrode assembly body 110 in the longitudinal direction or the length direction of the secondary battery 10.

The first winding axis 101AX and the second winding axis 102AX may be parallel to the X-axis direction.

The electrode assembly non-coating flat portion 120 of the first electrode assembly 101 may form a bent shape toward a direction. The electrode assembly non-coating flat portion 120 of the first electrode assembly 101 may form a bent shape toward the negative Y-axis direction as a whole.

The electrode assembly non-coating flat portion 120 of the second electrode assembly 102 may form a bent shape toward a direction. The electrode assembly non-coating flat portion 120 of the second electrode assembly 102 may form a bent shape toward the positive Y-axis direction as a whole.

Each of the electrode assembly non-coating flat portions 120 forming the first electrode assembly 101 and the second electrode assembly 102 may be bent toward between the first electrode assembly 101 and the second electrode assembly 102 in the thickness direction of the electrode assembly 100.

For example, the non-coating bent piece 122 forming the first electrode assembly 101 may be bent toward the second electrode assembly 102, and the non-coating bent piece122 forming the second electrode assembly 102 may be bent toward the first electrode assembly 101.

For example, the electrode assembly non-coating flat portion 120 forming the electrode assembly 100 may be symmetrically bent toward a virtual XZ plane formed between the first electrode assembly 101 and the second electrode assembly 102. Through this, the non-coating bent piece 122 of the electrode assembly non-coating flat portion 120 may not go beyond the front face or the rear face of the electrode assembly 100.

Through the above structure, the non-coating bent piece 122 of the electrode assembly non-coating flat portion 120 may be arranged side by side to the current collector 220 coupled to the electrode assembly 100. The non-coating bent piece 122 and the current collector 220 may be arranged side by side to be spaced apart from each other in the YZ plane.

As a result, the non-coating bent piece 122 and the current collector 220 can be arranged in a row along the X-axis direction. That is, when the electrode assembly 100 and the current collector 220 are welded and coupled, the non-coating bent piece 122 and the current collector 220 may be arranged side by side to be spaced apart from each other along the X-axis direction corresponding to the welding direction.

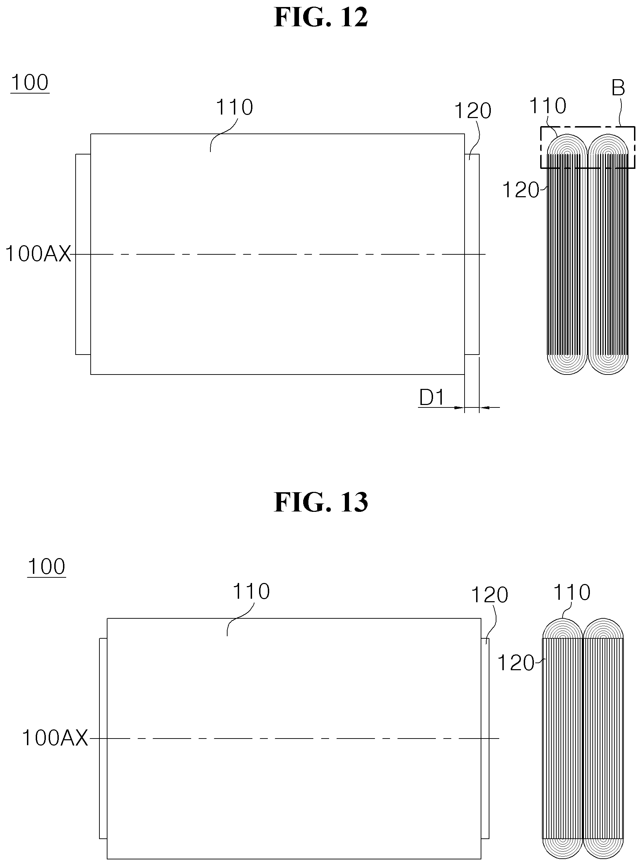

The electrode assembly non-coating flat portion 120 of the electrode assembly 100 is described in detail with reference to FIGS. 12 to 14.

A first length D1 (see FIG. 12) may be defined as a length before the electrode assembly non-coating flat portion 120 is bent. For example, the first length D1 (see FIG. 12) may be a length of the electrode assembly non-coating flat portion 120 extending from the electrode assembly flat portion FA in the length direction of the electrode assembly 100.

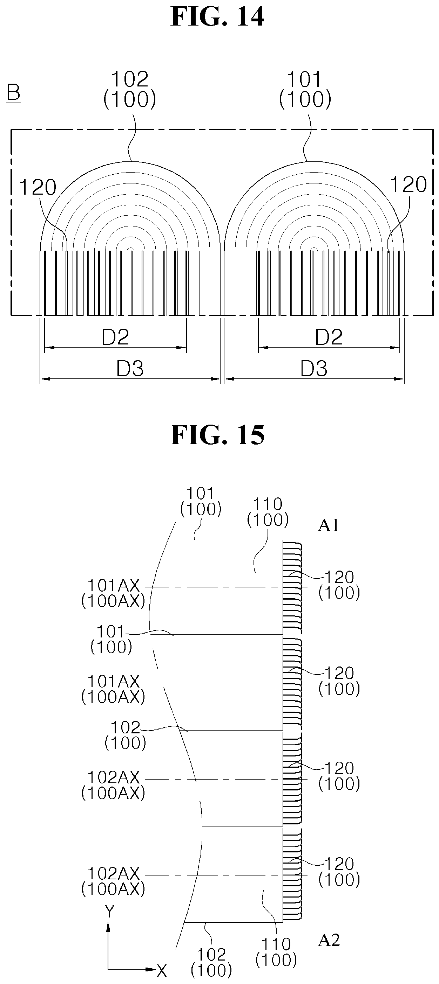

A second length D2 (see FIG. 14) may be defined as a length of the plurality of electrode assembly non-coating flat portions 120 that are stacked in the thickness direction of the electrode assembly 100. A third length D3 (see FIG. 14) may be defined as the thickness of the electrode assembly 100.

In embodiments of the disclosure, a sum of the first length D1 (see FIG. 12) and the second length D2 (see FIG. 14) may be less than or equal to the third length D3 (see FIG. 14). For example, when the electrode assembly non-coating flat portion 120 is bent, a maximum length of the non-coating bent piece 122 forming the electrode assembly non-coating flat portion 120 may not exceed a difference between the third length D3 (see FIG. 14) and the second length D2 (see FIG. 14).

Referring to FIG. 15, the secondary battery 10 according to an embodiment of the disclosure may include a plurality of electrode assemblies 100 arranged in a row along the thickness direction of the electrode assembly 100.

For example, the secondary battery 10 may include a pair of first electrode assemblies 101 and a pair of second electrode assemblies 102 arranged in a row along the thickness direction of the electrode assembly 100.

Each of the pair of first electrode assemblies 101 may include an electrode assembly body 110 wound around the first winding axis 101 AX and an electrode assembly non-coating flat portion 120 extending from the electrode assembly body 110 in the longitudinal direction or the length direction of the secondary battery 10. Further, non-coating bent pieces 122 forming each of the pair of first electrode assemblies 101 may be bent in the same direction.

Each of the second electrode assemblies 102 may include an electrode assembly body 110 wound around the second winding axis 102AX and an electrode assembly non-coating flat portion 120 extending from the electrode assembly body 110 in the longitudinal direction or the length direction of the secondary battery 10. Further, non-coating bent pieces 122 forming each of the pair of second electrode assemblies 102 may be bent in the same direction.

The first winding axis 101AX and the second winding axis 102AX may be parallel to the X-axis direction. The electrode assembly non-coating flat portions 120 of the pair of first electrode assemblies 101 may form a bent shape toward a direction. The electrode assembly non-coating flat portions 120 of the pair of first electrode assemblies 101 may form a bent shape toward the negative Y-axis direction as a whole.

The electrode assembly non-coating flat portions 120 of the pair of second electrode assemblies 102 may form a bent shape toward a direction. The electrode assembly non-coating flat portions 120 of the pair of second electrode assemblies 102 may form a bent shape toward the positive Y-axis direction as a whole.

Each of the electrode assembly non-coating flat portions 120 forming the pair of first electrode assemblies 101 and the pair of second electrode assemblies 102 may be bent toward between the first electrode assembly 101 and the second electrode assembly 102 in the thickness direction of the electrode assembly 100.

For example, the non-coating bent pieces 122 forming the pair of first electrode assemblies 101 may be bent toward the pair of second electrode assemblies 102, and the non-coating bent pieces 122 forming the pair of second electrode assemblies 102 may be bent toward the pair of first electrode assemblies 101.

For example, the non-coating bent piece 122 forming the electrode assembly 100 may be symmetrically bent toward a virtual XZ plane formed between the pair of first electrode assemblies 101 and the pair of second electrode assemblies 102.

Through this, the non-coating bent piece 122 of the electrode assembly non-coating flat portion 120 may not go beyond the front face or the rear face of the electrode assembly 100.

Through the above structure, the non-coating bent pieces 122 forming the plurality of electrode assembly non-coating flat portions 120 may be arranged side by side to the current collector 220 coupled to the electrode assembly 100. The non-coating bent piece 122 and the current collector 220 may be arranged side by side to be spaced apart from each other in the YZ plane.

As a result, the non-coating bent piece 122 and the current collector 220 can be arranged in a row along the X-axis direction. That is, when the electrode assembly 100 and the current collector 220 are welded and coupled, the non-coating bent piece 122 and the current collector 220 may be arranged side by side to be spaced apart from each other along the X-axis direction corresponding to the welding direction.

A process of manufacturing a secondary battery according to an embodiment of the disclosure is described below. First, a case 400 with a hollow shape is prepared.

Next, an electrode assembly 100 including an electrode assembly body 110 and an electrode assembly non-coating flat portion 120 extending from the electrode assembly body 110 is prepared.

Next, the electrode assembly 100 is stacked and accommodated in the case 400. Next, a cap assembly 200 including a current collector 220 is coupled to the electrode assembly 100.

A process of preparing the electrode assembly 100 is as follows. The electrode assembly non-coating flat portion 120 is formed on a first electrode and a second electrode having a flat shape through notching.

The electrode assembly 100 is wound, and the electrode assembly non-coating flat portion 120 is located outside the electrode assembly body 110.

A process of coupling the cap assembly 200 to the electrode assembly 100 is as follows.

The electrode assembly non-coating flat portion 120 is bent.

A bent portion of the electrode assembly non-coating flat portion 120 and the current collector 220 are coupled in a length direction of the electrode assembly 100.

Only specific examples of implementations of certain embodiments are described. Variations, improvements and enhancements of the disclosed embodiments and other embodiments may be made based on the disclosure of this patent document.

## Claims

1. A secondary battery (10) comprising:
at least one electrode assembly (100) each including an electrode assembly body (110) and a plurality of electrode assembly non-coating portions (120, 130) protruding from the electrode assembly body (110);
a case (400) accommodating the at least one electrode assembly (100), the case (400) having a hollow shape with an open upper face;
a current collector (220) accommodated in the case (400) and connected to the electrode assembly non-coating portions (120, 130); and
a cap plate (210) coupled to the case (400),
wherein the electrode assembly non-coating portions (120, 130) are bent and are coupled to the current collector (220).

2. The secondary battery (10) of claim 1, wherein the electrode assembly non-coating portion includes:
a non-coating body (121) protruding from the electrode assembly body (110); and
a non-coating bent piece (122) bent and extended from the non-coating body (121).

3. The secondary battery (10) of claim 2, wherein the non-coating bent piece (122) is bent from the non-coating body (121) in a thickness direction of the electrode assembly (100).

4. The secondary battery (10) of claim 2, wherein the non-coating bent piece (122) is bent from the non-coating body (121) toward a winding axis of the electrode assembly (100).

5. The secondary battery (10) of any one of claims 2 to 4, wherein an inner face of the non-coating bent piece (122) faces the electrode assembly body (110), and
wherein an outer face of the non-coating bent piece (122) faces the current collector (220).

6. The secondary battery (10) of any one of claims 1 to 5, wherein the at least one electrode assembly (100) includes:
electrode assembly flat portions (FA) formed in a width direction of the electrode assembly (100); and
an electrode assembly curved portion (WA) connecting the electrode assembly flat portions (FA),
wherein the electrode assembly non-coating portion includes an electrode assembly non-coating flat portion (120) formed on the electrode assembly flat portion (FA), and
wherein the electrode assembly non-coating portion includes an electrode assembly non-coating curved portion (130) formed on the electrode assembly curved portion (WA).

7. The secondary battery (10) of any one of claims 1 to 5, wherein a length defined by the plurality of electrode assembly non-coating portions (120, 130) based on a thickness direction of the electrode assembly body (110) is less than or equal to a thickness direction length of the electrode assembly body (110).

8. The secondary battery (10) of any one of claims 1 to 5, wherein the electrode assembly non-coating portions (120, 130) are symmetrically arranged with respect to a thickness direction of the electrode assembly (100).

9. The secondary battery (10) of claim 6, wherein a length of the electrode assembly non-coating flat portion (120) extending from the electrode assembly flat portion (FA) in a longitudinal direction of the electrode assembly (100) is defined as a first length,
wherein a length defined by the electrode assembly non-coating flat portions (120) stacked in a thickness direction of the electrode assembly (100) is defined as a second length, and
wherein a sum of the first length and the second length is less than or equal to a thickness of the electrode assembly (100).

10. A secondary battery (10) comprising:
a plurality of electrode assemblies (100) each including an electrode assembly body (110) and a plurality of electrode assembly non-coating portions (120, 130) protruding from the electrode assembly body (110);
a case (400) accommodating the plurality of electrode assemblies (100), the case (400) having a hollow shape with an open upper face;
a current collector (220) accommodated in the case (400) and connected to the electrode assembly non-coating portions (120, 130); and
a cap plate (210) coupled to the case (400),
wherein the plurality of electrode assemblies (100) include a first electrode assembly (101) and a second electrode assembly (102) that are stacked along a thickness direction of the electrode assembly (100),
wherein the electrode assembly non-coating portions (120, 130) forming the first electrode assembly (101) are bent in the thickness direction of the electrode assembly (100), and
wherein the electrode assembly non-coating portions (120, 130) forming the second electrode assembly (102) are bent in the thickness direction of the electrode assembly (100).

11. The secondary battery (10) of claim 10, wherein the electrode assembly non-coating portion is bent toward a winding axis of the electrode assembly (100).

12. The secondary battery (10) of claim 10, wherein the electrode assembly non-coating portions of the first electrode assembly (101) and the electrode assembly non-coating portions of the second electrode assembly (102) are bent in different directions.

13. A method of manufacturing a secondary battery (10), the method comprising:
preparing a case (400) having a hollow shape;
preparing an electrode assembly (100) including an electrode assembly body (110) and electrode assembly non-coating portions (120, 130) protruding from the electrode assembly body (110);
stacking and accommodating the electrode assembly (100) in the case (400); and
coupling a cap assembly (200) including a current collector (220) to the electrode assembly (100),
wherein preparing the electrode assembly (100) comprises:
forming the electrode assembly body (110) and the electrode assembly non-coating portions (120, 130) protruding from the electrode assembly body (110) in the electrode assembly (100) having a flat shape through a notching; and
winding the electrode assembly (100) to arrange the electrode assembly non-coating portions (120, 130) outside the electrode assembly body (110),
wherein coupling the cap assembly (200) to the electrode assembly (100) comprises:
bending the electrode assembly non-coating portions (120, 130); and
coupling a bent portion of the electrode assembly non-coating portion to the current collector (220).

14. The method of claim 13, wherein forming the electrode assembly non-coating portion comprises forming an electrode assembly non-coating flat portion (120) connected to an electrode assembly flat portion (FA) formed in a width direction of the electrode assembly (100), and
wherein forming the electrode assembly non-coating flat portion (120) comprises performing the notching on an outside of an electrode assembly curved portion (WA) connecting the electrode assembly flat portions (FA).

15. The method of claim 13 or 14, wherein the coupling is performed by a welding method.
